Europäisches Patentamt

European Patent Office

Office européen des brevets

(11) Publication number: **0 370 225**
**A1**

## EUROPEAN PATENT APPLICATION

(21) Application number: **89119113.2**

(51) Int. Cl.⁵: **B60D 1/06**

(22) Date of filing: **14.10.89**

(30) Priority: **26.10.88 FI 884934**
**21.08.89 FI 893918**

(43) Date of publication of application:
**30.05.90 Bulletin 90/22**

(84) Designated Contracting States:
**DE ES FR GB IT NL SE**

(71) Applicant: **OY DESMO AB**
**PL 9**
**SF-02211 Espoo(FI)**

(72) Inventor: **Kiviranta, Martti Keil &**
**Schaafhausen**
**Patentanwälte Eysseneckstrasse 31**
**D-6000 Frankfurt am Main 1(DE)**

(74) Representative: **Keil, Rainer A., Dipl.-Phys. Dr.**
**et al**
**KEIL & SCHAAFHAUSEN Patentanwälte**
**Eysseneckstrasse 31**
**D-6000 Frankfurt am Main 1(DE)**

(54) **Pull coupling for a trailer.**

(57) The invention relates to a pull coupling for a trailer, comprising a socket (1) for receiving a pull knob, a locking bar (2) for locking the pull knob in the socket, a spring (3) for urging locking bar (2) into a locking position, a handle (4), connected with the locking bar and for moving locking bar (2) against the force of spring (3) into a locking release position, as well as a lock device for locking said locking bar (2) in the locking position. The lock device includes a locking axle (6) which is rotatable around its longitudinal axis and which, after being rotated into the locking position, engages in a recess (7) formed in the locking bar. Locking axle (6) is provided with a recess (8) which by rotating the locking axle can be turned towards locking bar (2) for releasing the locking. In cooperation with locking axle (6) there is provided a cylinder lock by means of which said locking axle (6) can be released for rotation only when lock (9) is opened with a key.

Fig.1

## Pull coupling for a trailer

The present invention relates to a trailer pull coupling, comprising a socket for receiving a pull knob, a locking bar for locking the pull knob in the socket, a spring for urging the locking bar into a locking position, a handle, connected with the locking bar and for moving the locking bar against the spring force into a locking release position, as well as a lock device for locking the locking bar in the locking position.

An object of the invention is to further develop the lock device of such a pull coupling for making it structurally as simple as possible while making unauthorized unlocking or breaking of the lock device and stealing of the trailer more difficult than before.

This object is achieved on the basis of the characterizing features set forth in the annexed claims.

One embodiment of the invention will now be described with reference made to the accompanying drawings, in which

fig. 1 shows a trailer pull coupling of the invention in a side view and partially cut-away.

Fig. 2 shows a pull coupling lock device in a section along a line II-II in fig. 1.

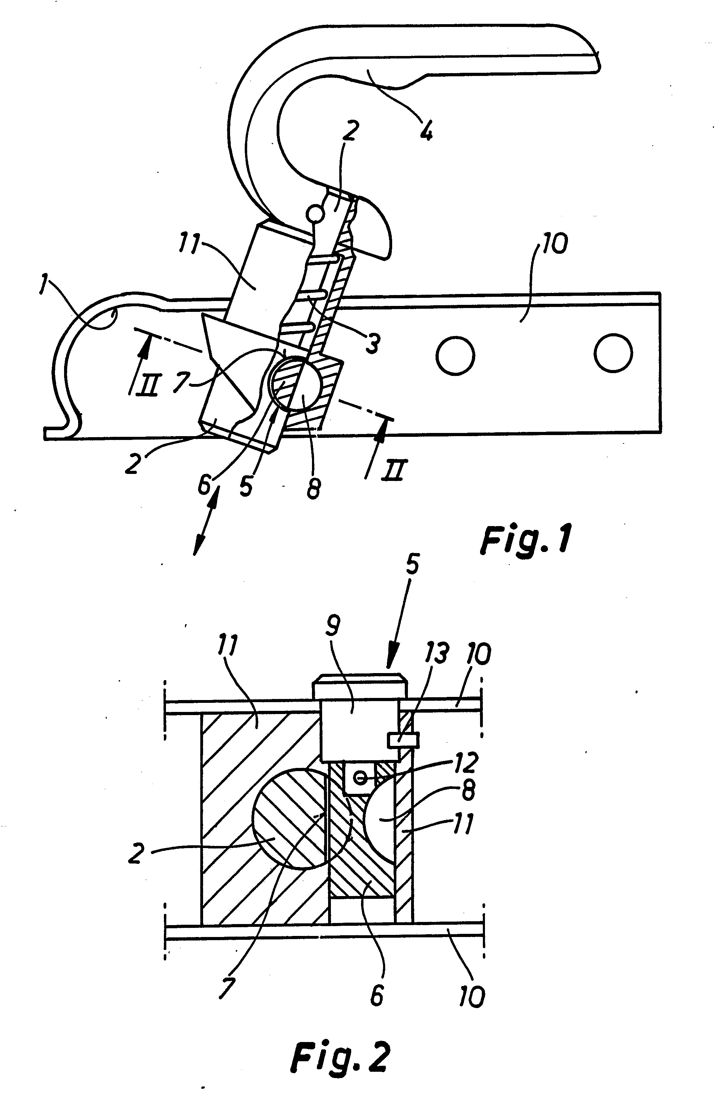

The trailer pull coupling shown in fig. 1 includes a base 10 provided with a pull knob receiving socket 1, adjacent to which a bushing 11 contains a locking bar 2 for locking the pull knob in the socket. A spring 3 urges locking bar 2 into a locking position. A handle 4 is provided at the top end of locking bar 2 and by means of handle 4 said locking bar 2 is axially movable against the force of spring 3 into a locking release or unlocking position.

A lock device 5 shown in more detail in fig. 2 includes a locking axle 6 which is rotatable around its longitudinal axis and which, after being turned into a locking position, engages in a recess 7 formed in locking bar 2. The locking axle 6 is provided with a recess 8 which by rotating said locking axle 6 can be turned towards locking bar 2 for releasing the locking.

As shown in fig. 2, the locking axle 6 is adapted to serve in cooperation with a cylinder lock 9 by means of which said locking axle 6 can be locked to be non-rotatable and released to be rotatable. The outer cylinder of lock 9 is fastened with a retaining screw 13 to bushing 11. On the other hand, the lock cylinder, which by means of a key can be released to be rotatable or locked to be non-rotatable, is fastened with a locking pin 12 to locking axle 6. The locking axle 6 and cylinder lock 9 are mounted axially one after the other and their center axes coincide. The lock device 5 consisting of locking axle 6 and cylinder lock 9 is mounted within base 10 adjacent to the bottom end of locking bar 2. The bottom end of locking bar 2 thciker than the top end thereof, the recess for receiving said locking axle 6 being located in the thicker portion of locking bar 2. This arrangement is preferred in terms of strength and, in addition, positioning said lock device 5 inside base 10 makes it substantially more dufficult to open the locking by breaking.

The locking axle 6 is secured to cylinder lock 9 in such a rotary position that the key can only be removed from cylinder lock 9 when locking axle 6 is in the locking position shown in figs. 1 and 2.

The bushing element 11 can be manufactured in a single piece which provides a carrier bushing for both locking bar 2 and lock device 5.

## Claims

1. A pull coupling for a trailer, comprising a base (10) provided with a socket (1) for receiving a pull knob, a locking means (2) for locking the pull knob in the socket, a spring (3) for urging locking means (2) into a locking position, a handle (4), connected with the locking means and for moving said locking means (2) against the force of spring (3) into a locking release position, as well as a lock device (5) for locking said locking means (2) in the locking position, **characterized** in that said lock device (5) includes a locking axle (6) which is rotatable around its longitudinal axis and which, after being rotated into the locking position, engages in a recess (7) formed in locking means (2) and which locking axle (6) is provided with a recess (8) which by rotating said locking axle (6) can be turned towards locking means (2) for releasing the locking, and that in cooperation with locking axle (6) there is provided a cylinder lock (9) by means of which said locking axle (6) can be released to be rotatable only when said lock (9) is opened by means of a key.

2. A pull coupling as set forth in claim 1, **characterized** in that said locking axle (6) and cylinder lock (9) are axially in succession and mounted inside said base (10).

3. A pull coupling as set forth in claim 2, **characterized** in that the key-turnable lock cylinder of cylinder lock (9) is secured to locking axle (6).

4. A pull coupling as set forth in claim 2, **char acterized** in that said locking axle (6) is located adjacent to the bottom end of a bar-shaped locking means (2).

5. A pull coupling as set forth in claim 4, **characterized** in that the bottom end of locking bar (2) is thicker than the top end thereof, the recess for receiving said locking axle (6) being located in the thicker portion of locking bar (2).

EP 0 370 225 A1

**Fig.1**

**Fig.2**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | AU-B- 45 163 (CARTER WESCO SALES)(1985)<br>* Page 3, line 7 - page 4, line 6; figures 1-3 * | 1-5 | B 60 D 1/06 |
| Y | US-A-2 639 160 (R. STUDEBAKER)<br>* Column 3, lines 1-41; figures 2,3,5 * | 1-5 | |
| A | GB-A-1 109 313 (J CLIFFORD PHILLIPS)<br>* The whole document * | 1-3 | |
| A | GB-A-2 067 486 (J. FAGG & SON)<br>* The whole document * | 1 | |

TECHNICAL FIELDS SEARCHED (Int. Cl.5)

B 60 D

The present search report has been drawn up for all claims

| Place of search | Date of completion of the search | Examiner |
|---|---|---|
| THE HAGUE | 02-02-1990 | LINTZ C.H. |

EPO FORM 1503 03.82 (P0401)